# EUROPEAN PATENT SPECIFICATION

(11) **EP 0 515 054 B1**
(45) Date of publication and mention of the grant of the patent: **17.07.1996**
(21) Application number: 92304012.5
(22) Date of filing: 05.05.1992
(51) Int. Cl.: G01N 17/00, G01N 29/04, G01N 29/20

(54) **Method for testing containers for corrosion**
Verfahren zum Prüfen von Containern auf Korrosion
Procédé pour tester des containers pour la corrosion

(30) Priority: 03.05.1991 GB 9109597
(43) Date of publication of application: 25.11.1992
(73) Proprietor: AIR PRODUCTS PLC, Walton-on-Thames Surrey KT12 4RZ (GB); ROLLS ROYCE MATEVAL LIMITED, Derby DE2 4RZ (GB)
(72) Inventor: Dang, Ngoc Duyen Philip, Worcester Park, Surrey KT4 8SN (GB); Holden, Anthony Charles, Callands, Warrington WA5 5RL (GB); Orrell, Martin, Stockport, Cheshire SK12 2BR (GB); Ratcliff, Ian Henry, Weybridge, Surrey KT13 0DW (GB)
(74) Representative: Lucas, Brian Ronald

(56) References cited:
- EP-A- 0 150 552
- US-A- 4 843 320
- PATENT ABSTRACTS OF JAPAN, unexamined applications, P section, vol. 10, no. 93, April 10, 1986 THE PATENT OFFICE JAPANESE GOVERNMENT page 92 P 445

## Description

This invention relates to a method for testing containers for corrosion and, more particularly but not exclusively, relates to a method for testing cylinders, vessels and pipes.

It has been known for many years that structural cracks, for example in the wheels of railway carriages, can be detected by striking the wheel and listening to the response. A wheel in good condition gives a clear ring whilst a wheel with a structural crack gives a dull, lifeless response caused by the crack reducing the natural resonant frequency.

In a paper entitled "A Spin-Off Technique for the Inspection of a New Generation Gas Turbine Fan Blade", given at a Conference on "Acoustic Emission and Photo-Acoustic Spectroscopy" held at Chelsea College, University of London, December 1983, Dr. T.J. Holroyd and J.R. Webster discuss the use of an acoustic technique in which sound is injected into an evacuated hollow fan blade and the reverberations are detected by an electronic ear and electronically evaluated to test the integrity of the blade. The reverberations from an evacuated hollow fan blade decay relatively slowly whilst the reverberations from a defective hollow fan blade containing air are rapidly damped. It should be noted that in this technique the natural resonant frequency of the blade remains substantially constant. The authors suggest that their method might be used for detecting the surface contamination of gas or vapour filled vessels, and in this context refer to the presence of oil or grease or other foreign material on the surface of the vessel.

Patent Abstracts of Japan, unexamined applications, P section vol. 10, no. 93, April 10, 1986, page 92, P445, 60-228 912 discloses a method of detecting fine corrosion in which a spectrum of frequencies are successively applied to a pipe or container under test. Details of the reflected wave are recorded and a graph produced showing the amplitude of the reflected wave at different frequencies. When corrosion is present the frequency at which the maximum amplitude of the reflected wave occurs is displaced from the frequency at which the maximum amplitude occurs in a corrosion free pipe or container, the displacement giving an indication of the degree of corrosion. No indication of the frequencies used is given.

In the industrial gas business, gases are supplied to customers in cylinders which can be at pressures up to 200 bar. When a cylinder is manufactured it is date stamped and at regular intervals, for example once every three or five years, the valve is removed and the inside of the cylinder is inspected using an optical fibre inspection probe. If any corrosion is detected it is removed and, assuming there are no structural problems, the cylinder is stamped and placed back in service for up to ten years before re-testing.

In addition to the above procedure, each time a cylinder is returned for refilling it is emptied and tested by tapping in much the same way as the wheel of a railway carriage. If the response is dull the cylinder is sent for examination.

Examination of cylinders rejected by the ring test showed that most had very heavy corrosion on their internal surface.

Starting from this observation the inventors questioned whether the technique used by Dr. T.J. Holroyd and J.R. Webster would be suitable for detecting corrosion.

Mr. Webster was approached. However, his equipment did not detect corrosion.

A number of parameters were varied to no avail. However, during one test measurable attenuation was noted. It was subsequently discovered that the frequency applied to the container is critical.

According to one aspect of the present invention there is provided a method of testing a container for corrosion, characterized in that said method comprises the steps of applying a signal in the range 30kHz -100kHz to said container and monitoring the attenuation of said signal in said container.

As the frequency is increased above 100kHz the signal is attenuated too rapidly. Similarly, at frequencies below 30kHz other factors such as ambient noise factors affect the signal measurement so that a reliable determination cannot be made.

Preferably, the signal applied is in the range 35kHz - 95kHz, more preferably 40kHz - 80kHz, still more preferably 45kHz - 60kHz and, advantageously, 50kHz - 55kHz.

The container may be, for example a cylinder, a vessel or a pipe.

The method is particularly effective in detecting even small quantities of corrosion in areas which are not easily accessible and a good correlation has been found between the amount of corrosion and the rate of attenuation.

It should be noted that this method clearly distinguishes corrosion from minor structural failures which have little effect on the attenuation of the signal at these frequencies.

Although gases are generally sold in cylinders many customers have their gases delivered in packs. There are two main types of packs in use.

In one type of pack from 5 to 20 cylinders are arranged in a metal pallet. The cylinders are held in position by metal or fibre straps and, frequently, are connected together by one or more manifolds.

In another type of pack a bundle of tubes are spaced apart by end plates and a strap is passed around the outside of the bundle.

In either case a ring test cannot be used since the sound is attenuated by the material in contact with the cylinder.

In order to test the cylinders in these packs the cylinders are first emptied. Each cylinder has then to be individually removed, ring tested, replaced in the pack, secured in position, reconnected to the manifold and the connections tested before dispatch.

It will be appreciated that this is time-consuming and expensive and that a very significant saving could be made if each cylinder could be tested in a satisfactory manner without being removed from the cylinder pack.

The present invention, at least in its preferred embodiments, aims to satisfy this need.

According to a second aspect of the present invention, there is provided a method of testing containers for corrosion when said containers are in packs, which method comprises the steps of sequentially applying a signal in the range 30kHz - 100kHz to each container to be tested and monitoring the attenuation of said signal in said container.

Preferably, the signal is applied in the range 40kHz - 80kHz, more preferably 45kHz - 60kHz and, advantageously, 50kHz - 55kHz.

Advantageously, the method includes the steps of starting a timer when the attenuation of said signal falls to a first level, stopping said timer when the attenuation of said signal falls to a second level, and comparing the elapsed time with a predetermined value.

The containers may be, for example, cylinders, vessels, pipes or mixtures thereof arranged in packs.

In a preferred embodiment a probe is simply smeared with a coupling grease and pressed against the cylinder being tested. A whole pack of cylinders can be tested in a fraction of the time it would previously have taken to just remove the manifold. Accordingly, there is a very significant cost saving.

Preferably , in either of the above methods the time taken for the strength of the reverberations to fall from a higher level to a lower level is measured. If the rate of attenuation exceeds a certain limit then the container is automatically sent for detailed examination. Alternatively, the degree of corrosion can be approximately determined by comparing the attenuation with the results obtained from a calibration curve. It should be emphasized that although this test indicates the presence of corrosion it does not indicate the location of the corrosion and detailed examination is necessary if corrosion is present.

For a better understanding of the invention reference will now be made, by way of example, to the accompanying drawings, in which:-
Figure 1 is a block diagram of one embodiment of an apparatus for carrying out a method in accordance with the invention;
Figure 2 is a circuit diagram of the bandpass filter constituting part of the apparatus shown in Figure 1;
Figure 3 is a perspective view of one embodiment of a pack of cylinders;
Figure 4 is a side view of a tube trailer carrying another embodiment of a pack of cylinders; and
Figure 5 is a view taken along line V-V of Figure 4.

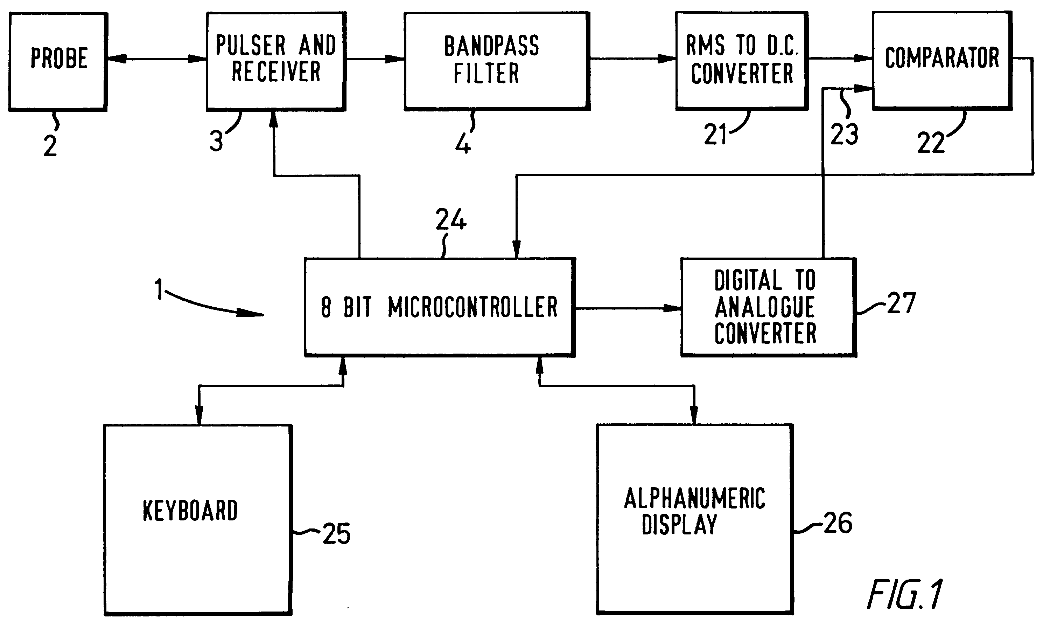

Referring to Figure 1, there is shown a block diagram of one embodiment of an apparatus for carrying out a method in accordance with the invention. The apparatus, which is generally identified by reference numeral 1, comprises a probe 2 which is designed to apply a signal to the surface of a cylinder and detect the attenuation of said signal in said cylinder.

The probe 2 incorporates an air backed 50kHz PZT crystal to give a long pulse of a well defined frequency. The face of the probe 2 is provided with a soft rubber coating to assist coupling to the cylinder. The probe 2 is also provided with a magnet to firmly hold the probe 2 on a cylinder.

The probe 2 is connected to a pulser/receiver 3 which provides a 280v 5µs pulse to set the probe 2 into oscillation. A device pulse of 270µs into the trigger input of the pulser/receiver 3 is required to activate the probe pulse.

The pulser/receiver 3 is available from Rolls-Royce MatEval at 245/246 Europa Boulevard, Gemini Business Park, West Brook, Warrington WA5 5TN, England as Part No. TC 1076/A.

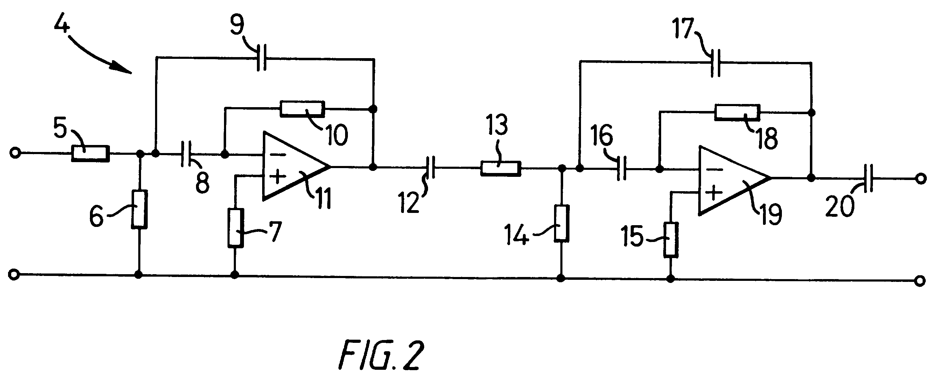

The receiver of the pulser/receiver 3 is connected to a bandpass filter 4. The filter stages are designed to produce a narrow bandpass range of 45kHz to 55kHz with gain so that the receiver circuit of the pulser/receiver 3 can be limited in its gain requirements. The circuit diagram for the filter stages is shown in Figure 2.

The components of the bandpass filter 4 are as follows:

| | | |
|---|---|---|
| 5 | resistor | 15 kΩ |
| 6 | resistor | 3 kΩ |
| 7 | resistor | 10 kΩ |
| 8 | capacitor | 220 pF |
| 9 | capacitor | 220 pF |
| 10 | resistor | 100 kΩ |
| 11 | operational amplifier | |
| 12 | capacitor | 100 nF |
| 13 | resistor | 12 kΩ |
| 14 | resistor | 2.4 kΩ |
| 15 | resistor | 10 kΩ |
| 16 | capacitor | 220 pF |
| 17 | capacitor | 220 pF |
| 18 | resistor | 82 kΩ |
| 19 | operational amplifier | |
| 20 | capacitor | 100 nF |

The filtered signal leaving the bandpass filter 4 is passed to an RMS to DC converter 21. An integrated circuit made by Analogue Devices (Part Number AD636) with a smoothing capacitor value (CAV) of 68nF is shown.

The signal leaving the RMS to DC converter 21 is fed to a comparator 22 where it is compared against a reference signal from line 23. The comparator 22 comprises National Semiconductor Part No. LM393A. If the voltage from the RMS to DC converter 21 falls below the voltage of the reference signal the output of the comparator 22 swings very rapidly from the negative to the positive supply rail. This change is detected by a microcontroller 24 as a timing trigger pulse.

The microcontroller 24 serves five main functions, viz:
a) It receives information from keyboard 25;
b) It drives alphanumeric display 26;
c) It controls the pulser section of the pulser/ receiver 3;
d) It generates a reference signal for comparator 23 (via digital to analogue converter 27); and
e) It received information from comparator 22.

The microcontroller 24 is manufactured by Phillips Components (Part Number SC 87C51CCF40) and its function is determined by Rolls-Royce MatEval firmware program TAP-V2-1.

The digital to analogue convertor 27 which switches between two reference voltages using an analogue switch manufactured by Siliconix Inc. (Part Number DG419DJ) whilst the alphanumeric display 26 is manufactured by Sanyo (Part Number LCM570-31A).

In use, the keyboard operator first inputs a start signal to the microcontroller 24 via the keyboard 25. The microcontroller 24 then actuates the pulser portion of the pulser/receiver 3 so that the probe 2 transmits a single 250µs 50 kHz pulse. The head of the probe 2 is coated with coupling fluid and held against a cylinder to be tested. The receiver of the pulser/receiver 3 continually monitors the sound in the cylinder and this is filtered by bandpass filter 4, converted and fed to comparator 22. The microcontroller 24 sends a high level signal to the comparator 22. When the output of the convertor 21 falls to this high level the comparator 22 sends a trigger signal to the microcontroller 24. A count is started and a lower level signal is sent to the comparator 22. When this is triggered the count is stopped. The time elapsed is then compared with a reference.

If the reference time is exceeded then the cylinder automatically passes.

If the reference time is not exceeded then the alphanumeric display asks for further information regarding the cylinder. If the cylinder is not associated with a pack then it is automatically rejected. If the cylinder is in a pack then the operator is asked to define the position of the cylinder in the pack. In this connection differences in attenuation have been observed between cylinders at the centre of a pack and those at the corner.

Once the required information is inserted the data from the test is re-evaluated and the alphanumeric display 26 indicates "PASS" or "FAIL" according to the result.

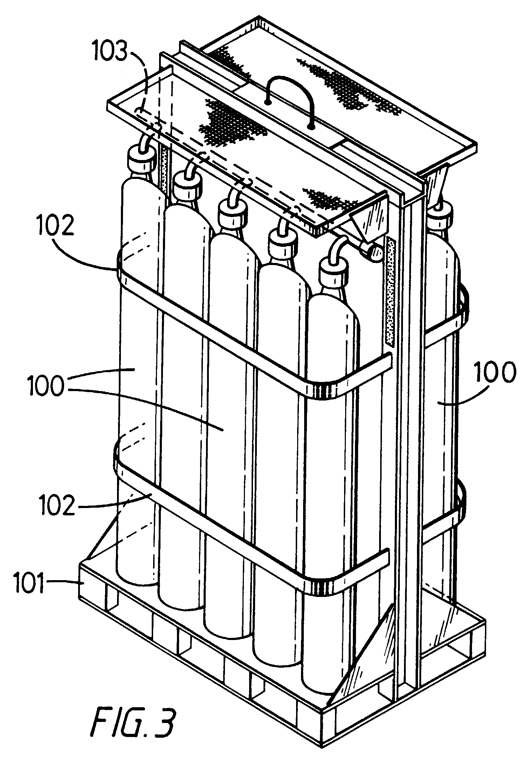

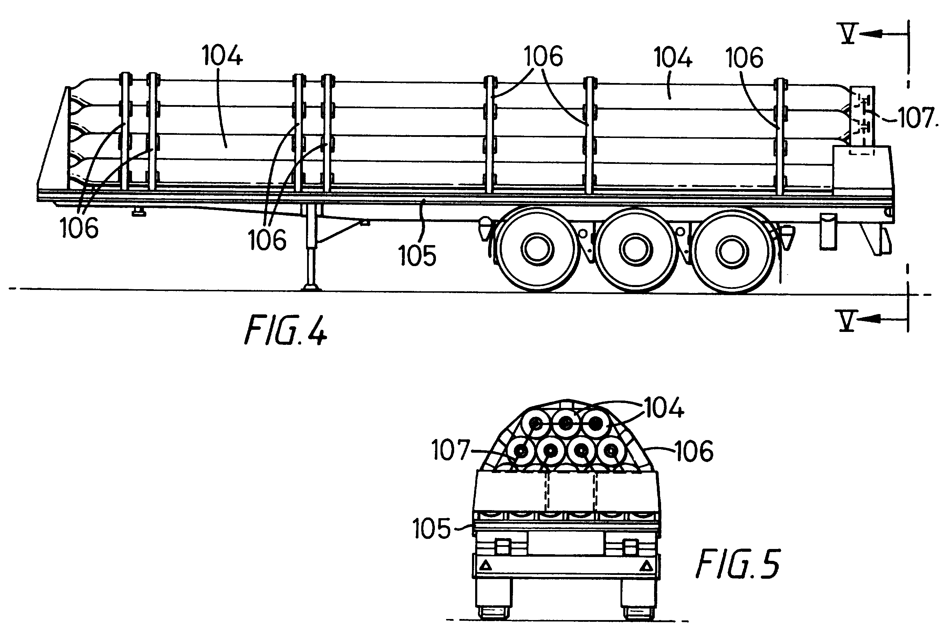

Figures 3 and 4 show two typical cylinder packs, the cylinders of which have been successfully tested without removing the cylinders. The magnet in the probe 2 is particularly useful in holding the probe 2 in intimate contact with the cylinder being tested, particularly where the cylinder is in the midst of a pack of cylinders and thus relatively inaccessible.

In Figure 3 the cylinders 100 are stacked on a metal pallet 101 and retained by fibre straps 102. It will be noted that the cylinders 100 are touching one another and are connected to a common manifold 103.

In Figures 4 and 5 eighteen cylinders 104 are mounted on a tube trailer 105 and are held together by fibre straps 106. The cylinders 104 are connected by a common manifold (107).

In either case the cylinders 100, 104 can be tested in situ by the apparatus shown in Figures 1 and 2.

Whilst the preferred embodiment described was primarily developed for detecting rust in steel containers, other forms of corrosion can also be detected, for example corrosion on aluminium.

## Claims

1. A method of testing a container for corrosion, characterized in that said method comprises the steps of applying a signal in the range 30kHz - 100kHz to said container and monitoring the attenuation of said signal in said container.

2. A method according to Claim 1, characterized in that the signal applied is in the range 35kHz - 95kHz.

3. A method according to Claim 2, characterized in that the signal applied is in the range 40kHz - 80kHz.

4. A method according to Claim 3, characterized in that said signal is applied in the range 45kHz - 60kHz.

5. A method according to Claim 4, characterized in that said signal is applied in the range 50kHz - 55kHz.

6. A method according to Claim 1, 2, 3, 4 or 5, characterized in that said container is selected from the group consisting of a cylinder, a vessel, and a pipe.

7. A method of testing containers in packs for corrosion, which method comprises the steps of sequentially applying a signal in the range 30kHz - 100kHz to each container to be tested and monitoring the attenuation of said signal in said container.

8. A method according to Claim 7, characterized in that the signal applied is in the range of 35kHz - 95kHz.

9. A method according to Claim 8, characterized in that the signal applied is in the range of 40kHz - 80kHz.

10. A method according to Claim 9, characterized in that said signal is applied in the range 45kHz - 60kHz.

11. A method according to Claim 10, characterized in that said signal is applied in the range 50kHz - 55kHz.

12. A method as claimed in any preceding Claim, including the steps of starting a timer when the attenuation of said signal falls to a first level, stopping said timer when the attenuation of said signal falls to a second level, and comparing the elapsed time with a predetermined value.

13. A method as claimed in Claims 7, 8, 9, 10, 11 or 12, characterized in that said container is selected from the group consisting of cylinders, vessels, pipes or mixtures thereof arranged in packs.

## Patentansprüche

1. Verfahren zum Prüfen eines Behälters auf Korrosion, dadurch gekennzeichnet, daß das Verfahren die Schritte enthält: Anlegen eines Signals im Bereich von 30 kHz - 100 kHz an den Behälter und Überwachen der Dämpfung des Signals im Behälter.

2. Verfahren nach Anspruch 1, dadurch gekennzeichnet, daß das angelegte Signal im Bereich von 35 kHz - 95 kHz liegt.

3. Verfahren nach Anspruch 2, dadurch gekennzeichnet, daß das angelegte Signal im Bereich von 40 kHz - 80 kHz liegt.

4. Verfahren nach Anspruch 3, dadurch gekennzeichnet, daß das angelegte Signal im Bereich von 45 kHz - 60 kHz liegt.

5. Verfahren nach Anspruch 4, dadurch gekennzeichnet, daß das angelegte Signal im Bereich von 50 kHz - 55 kHz liegt.

6. Verfahren nach Anspruch 1, 2, 3, 4 oder 5, dadurch gekennzeichnet, daß der Behälter aus der Gruppe ausgewählt wird, die aus einem Zylinder, einem Gefäß und einem Rohr besteht.

7. Verfahren zum Prüfen von in Bündeln angeordneten Behältern auf Korrosion, wobei das Verfahren die Schritte enthält: nacheinander Anlegen eines Signals im Bereich von 30 kHz - 100 kHz an jeden zu prüfenden Behälter und Überwachen der Dämpfung des Signals im Behälter.

8. Verfahren nach Anspruch 7, dadurch gekennzeichnet, daß das angelegte Signal im Bereich von 35 kHz - 95 kHz liegt.

9. Verfahren nach Anspruch 8, dadurch gekennzeichnet, daß das angelegte Signal im Bereich von 40 kHz - 80 kHz liegt.

10. Verfahren nach Anspruch 9, dadurch gekennzeichnet, daß das angelegte Signal im Bereich von 45 kHz - 60 kHz liegt.

11. Verfahren nach Anspruch 10, dadurch gekennzeichnet, daß das angelegte Signal im Bereich von 50 kHz - 55 kHz liegt.

12. Verfahren nach irgendeinem vorangehenden Anspruch, das die folgenden Schritte enthält: Starten eines Zeitgebers, wenn die Dämpfung des Signals auf einen ersten Pegel fällt, Anhalten des Zeitgebers, wenn die Dämpfung des Signals auf einen zweiten Pegel fällt, und Vergleichen der verstrichenen Zeit mit einem vorgegebenen Wert.

13. Verfahren nach den Ansprüchen 7, 8, 9, 10, 11 oder 12, dadurch gekennzeichnet, daß der Behälter aus der Gruppe ausgewählt wird, die aus Zylindern, Gefäßen, Rohren oder Gemischen hiervon, die in Bündeln angeordnet sind, besteht.

## Revendications

1. Procédé pour tester la corrosion des conteneurs, caractérisé en ce que le procédé comprend les étapes consistant à appliquer un signal dans la plage de 30 kHz - 100 kHz à ce conteneur et à contrôler l'atténuation de ce signal dans le conteneur.

2. Procédé selon la revendication 1, caractérisé en ce que le signal appliqué se situe dans la plage de 35 kHz - 95 kHz.

3. Procédé selon la revendication 2, caractérisé en ce que le signal appliqué se situe dans la plage de 40 kHz - 80 kHz.

4. Procédé selon la revendication 3, caractérisé en ce que le signal est appliqué dans la plage de 45 kHz - 60 kHz.

5. Procédé selon la revendication 4, caractérisé en ce que le signal est appliqué dans la plage de 50 kHz - 55 kHz.

6. Procédé selon la revendication 1, 2, 3, 4 ou 5, caractérisé en ce que le conteneur est choisi dans le groupe constitué par un cylindre, un récipient et un tuyau.

7. Procédé pour tester la corrosion des conteneurs en paquets, lequel procédé comprend les étapes consistant à appliquer séquentiellement un signal dans la plage 30 kHz - 100 kHz à chaque conteneur à tester et à contrôler l'atténuation du signal dans le conteneur.

8. Procédé selon la revendication 7, caractérisé en ce que le signal appliqué se situe dans la plage de 35 kHz - 95 kHz.

9. Procédé selon la revendication 8, caractérisé en ce que le signal appliqué se situe dans la plage de 40 kHz - 80 kHz.

10. Procédé selon la revendication 9, caractérisé en ce que le signal est appliqué dans la plage de 45 kHz - 60 kHz.

11. Procédé selon la revendication 10, caractérisé en ce que le signal est appliqué dans la plage de 50 kHz - 55 kHz.

12. Procédé selon l'une quelconque des revendications précédentes, comprenant les étapes consistant à enclencher un chronomètre lorsque l'atténuation du signal descend à un premier niveau, arrêter le chronomètre lorsque l'atténuation du signal descend à un second niveau, et comparer le temps écoulé à une valeur prédéterminée.

13. Procédé selon la revendication 7, 8, 9, 10, 11 ou 12, caractérisé en ce que le conteneur est choisi dans le groupe constitué par des cylindres, des récipients, des tubes ou conduites ou des mélanges de ceux-ci disposés en paquets.
